# EUROPÄISCHE PATENTSCHRIFT

(11) **EP 0 850 113 B1**
(45) Veröffentlichungstag und Bekanntmachung des Hinweises auf die Patenterteilung: **05.12.2001**
(21) Anmeldenummer: 96937180.6
(22) Anmeldetag: 03.09.1996
(51) Int. Cl.: B21C 37/04

(54) **VERSTÄRKTES FORMTEIL, VERFAHREN ZU SEINER HERSTELLUNG UND SEINE VERWENDUNG**
REINFORCED FORMED PART, PROCESS FOR ITS PRODUCTION AND ITS USE
PIECE MOULEE RENFORCEE, PROCEDE DE FABRICATION CORRESPONDANT ET UTILISATION DE LADITE PIECE MOULEE

(30) Priorität: 04.09.1995 DE 29514164 U
(43) Veröffentlichungstag der Anmeldung: 01.07.1998
(60) Teilanmeldung: 00122343.7
(73) Patentinhaber: Ebbinghaus, Alfred, 73431 Aalen (DE)
(72) Erfinder: Ebbinghaus, Alfred, 73431 Aalen (DE)
(74) Vertreter: Neidl-Stippler, Cornelia, Dr.
(86) Internationale Anmeldenummer: DE9601642
(87) Internationale Veröffentlichungsnummer: WO9709134

(56) Entgegenhaltungen:
- DE-A- 1 933 321
- US-A- 3 834 881
- US-A- 3 940 262
- US-A- 3 941 182
- US-A- 4 200 326
- US-A- 4 774 117
- JOURNAL OF MATERIALS SCIENCE, Bd. 18, Nr. 7, Juli 1983, LONDON GB, Seiten 1899-1911, XP0006170831 DAVIES & SHU ZHEN: "Metallic foams: their production, properties and applications"

## Beschreibung

Die Erfindung betrifft, Verfahren zur Herstellung eines verstärkten Formteils, ein danach hergestelltes Formteil und dessen Verwendung. Sie betrifft ins-besondere mindestens teilweise hohle Formteile mit ggf. in Form und/oder Größe unterschiedlichen Längs- und/oder Querschnitten mit einer hohlen Außenform und einer Füllung mit einem offen- oder geschlossenzelligen Metall-Schaumstoff.

Trägerelemente aus Hohlmaterial, wie Rohre, Stangen, Hohlträger (bspw. mittels des Innenhochdruckumformverfahrens hergestellte Trägerteile für Fahrräder, Autohinterachsen, Abgasrohre etc.) sind für die verschiedensten Anwendungsgebiete bekannt - so für Bauwerke, insbesondere Brücken oder auch Häuser - als stützende und tragende Elemente oder auch für den Bau von Luft - Land- und Wasserfahrzeugen, Regalsysteme, Möbel, u. dgl.

Sie haben unter anderem den Vorteil, eine leichte aber dennoch gegenüber Belastungen widerstandsfähige Bauweise zu ermöglichen.

Bspw. werden bei Kraftfahrzeugen neuerdings zur Gewichtsersparnis wieder Fachwerkrahmen eingesetzt, um eine besonders leichte, widerstandsfähige und torsionssteife Bauweise zu ermöglichen. Auch bei Flugzeugen, bei denen Gewichtsersparnis ein wesentlicher Gesichtspunkt bei der Konstruktion ist, wurde häufig eine Fachwerkbauweise mit hohlen oder massiven Fachwerktragteilen eingesetzt.

Die bekannten Tragkonstruktionen und -teile sind insofern noch verbesserungsfähig, als es immer erwünscht ist, diese noch widerstandsfähiger - insbesondere mit besserer Knickfestigkeit - herzustellen.

Ferner war es nachteilig, daß für tragende Hohlteile immer noch hohe Wandstärken und große Dimensionen verwendet mußten, die zu unerwünscht hohen Gewichten und Abmessungen dieses Teils führten - insbesondere, wenn eine erhöhte Knickfestigkeit bzw. Belastbarkeit erwünscht war. Bei hohen Wanddicken traten auch Probleme bei der Herstellung komplizierter Formen auf, da dann einfache Umformverfahren, die nur für Material geringer Stärke eingesetzt werden konnten, nicht mehr eingesetzt werden konnten.

Es ist bereits bekannt, Hohlteile auszuschäumen, um bspw. deren Schwingungseigenschaften zu verändern. So werden Kardanwellen ausgeschäumt, um ihre Laufeigenschaften und Schwingungseigenschaften zu verbessern. Bei diesem Ausschäumen von Hohlteilen trägt der Polymerschaum, der dort keinen hohen Deformationswiderstand aufweist, zu den Deformationseigenschaften der Welle nichts bei und wirkt lediglich als schwingungsverändernder Zusatz.

Es ist Aufgabe der Erfindung, Komponenten herzustellen, die leichter und belastbarer als bekannte Bauteile.

Aus dem US-A-4,200,326 (WILCOX) sind mit Polyurethan oder Epoxidharz ausgeschäumte mehrteilige Stahi-Eisenbahnachsen bekannt geworden, bei denen der Kunststoffschaum dazu dient, in einem mehrstückigen hohlen Achs- oder Radteil dessen Außenwand mit dessen Innenwand an den Enden zu verbinden und so der Antriebskraftübertragung und der Aufnahme von Biegekräften zu dienen. Diese Kunststoffe vermögen aber keine größeren Kompressionskräfte aufzunehmen und dienen als zusätzliche elastische Verbindung mit Rückstellkräften zwischen den Einzelkomponenten der Eisenbahnachse und des Rades. So besitzt bspw. Aluminiumschaum einen E-Modul (GPa) von 10, während aufgeschäumtes Polyurethan gerade einen E-Modul von 0,38 (GPa) bei einer Dichte von 0,53 g/cm³ besitzt - daraus läßt sich absehen, daß Kunststoffschaum keine hohe Belastungsfähigkeit übermitteln kann. Die Verwendung von Metallschäumen mit hohem Deformationswiderstand als Aufprallschutz für Kraftfahrzeugverkleidungsteile ist aus dem DE-U-94 02 743 bekannt, wo ein Metallschaum als Deformationskissen eingesetzt wird. Dort wirkt der Metallschaum alleine als energievernichtender Bestandteil, als "Kissen" eines Deformationsteils - es handelt sich dabei nicht um ein tragendes Teil, sondern um ein Deformationsteil, wobei der Schaum selbst keine Verstärkung eines Außenteils oder eines tragenden Teils ist. Der dort verwendete Aluminiumschaum ist unelastisch, wie dort auf Seite 3, Zeile 29 - 30 erläutert wird. Derartige spröde Aluminiumschäume besitzen zwar einen hohen E-Modul, verformen aber nicht elastisch/plastisch sondern nur durch undefiniertes Brechen. Sie vermögen also keine Lehre zu geben, das elastische Verhalten eines Fomteils zu verbessern. Aus dem US-A-3,275,424 ist bekannt, offenzellige Metallschäume, die in hohlen Außenteilen hergestellt werden, als Filter zu verwenden - es handelt sich dabei um den Spezialfall eines Filters mit offenzelligem Schaum, keinesfalls aber um ein tragendes Teil.

Aus der US-A-4774117 (OEFNER) ist ein Lastträger bekannt geworden, der aus einer Faser-Composit-Struktur besteht, die relativ starr mindestens im Zentrum des Trägers und an den Enden elastisch ist, was dadurch erreicht wird, daß lamellen/sandwhichartig, durch Zwischenwände voneinander getrennt, über die gesamte Breite des Trägers vorgesehen sind. Es handelt sich somit um eine mehrschichtige Konstruktion, die besonders zur elastischen Aufnahme von Biege- und Torsionskräften geeignet ist - nicht aber, um auch hohe Kompressionswiderstandsfähigkeit zu liefern. sind.

Die Aufgabe wird erfindungsgemäß durch ein Verfahren gemäß Patentanspruch 1 gelöst.

Vorteilhafte Weiterbildungen ergeben sich aus den Unteransprüchen.

Als hohles Außenformteil können dabei an sich bekannte hohle Formteile, wie nahtlose oder geschweißte Rohre oder andere bekannte Profile eingesetzt werden - es ist aber auch möglich, derartige Formteile speziell herzustellen und entsprechend den Anforderungen auszulegen. Als Material dafür bieten sich Metalle, aber auch Kunststoffe, eingeschlossen Keramiken und Glas, an. Es ist besonders vorteilhaft, wenn bspw. Hohlteile mit Spezialformen, die bspw. gegen Knicke besonders widerstandsfähig sind, wie längsgewellte hohle Rohre, gebogene Rohre od. dgl. verstärkt werden.

Dabei ist es aus Festigkeitsgründen vorteilhaft, wenn der Faserverlauf des Materials der Außenform im wesentlichen parallel zu den Außenkonturen des Formteils verläuft, wie dies bspw. durch die Herstellung des Außenformteils mit dem bekannten IHV-Verfahren möglich ist. Dafür sind dann die entsprechenden, kalt umformbaren Materialien dem Fachmann geläufig.

Es kann dabei günstig sein, daß das Außenformteil mehrere parallel zueinander verlaufende, aufeinanderliegende Schichten gleicher oder unterschiedlicher Materialien aufweist, deren Faserverlauf zumindest teilweise parallel zueinander ist.

Insbesondere zur Gewichtsersparnis kann das gesamte Bauteil im wesentlichen aus dem gleichen oder unterschiedlichen Leichtmetallen bestehen. Bspw. kann das Leichtmetall Aluminium oder Magnesium oder eine Legierung derselben sein, womit auch eine günstige Korrosionsfestigkeit verbunden sein kann.

Es ist möglich und in vielen Anwendungsfällen erwünscht, daß das Bauteil faserverstärkte Werkstoffe aufweist, die bei leichtem Gewicht eine hohe mechanische Belastbarkeit aufweisen.

Selbstverständlich können auch Materialien für das Außenformteil eingesetzt werden, die in bekannter Weise warmgeformt wurden, bspw. warmverformte Kunststoffe, wie geblasene oder auch gegossene Kunststoffe, auch faserverstärkte Kunststoffe, die durch den Innenschaum erheblich an Tragfestigkeit gewinnen. Auch natürliche Polymere, können erfolgreich eingesetzt werden. Ein besonderer Anwendungsfall ist Glas, das sehr elastisch und leicht ist.

Das Bauteil kann unterschiedliche Längsschnitte und auch unterschiedliche Querschnitte aufweisen.

Es kann vorteilhaft sein, daß die Einzelkomponenten des ausgeschäumten Formteils aus unterschiedlichen Materialien wie bspw. Metall/Keramik; Metallschaum/Kunststoffaußenwand, eingeschlossen natürliche Polymere, wie Papier oder Cellulose oder Kunststoffe etc. bestehen.

Es kann günstig sein, daß mindestens ein hohles Außenteil Vertiefungen oder Erhebungen aufweist.

Die Aufgabe wird auch durch ein ein Formteil nach Patentanspruch 11 gelöst. Es kann ein hohles Teil über ein an sich bekanntes Formverfahren hergestellt und sodann in dieses ein Schaumkörper so eingebracht werden, so daß der Schaumkörper am hohlen Teil zumindest teilweise anliegt und im hohlen Teil durch Paßsitz oder aber durch ein bekanntes Befestigungsverfahren befestigt wird.

Zur Herstellung von hohlen Formteilen kann eine hohle Auβenform in an sich bekannter Weise durch Ziehen, Gießen, Extrudieren, Innenhochdruckumformen hergestellt werden und danach mit dem Schaumausgangsmaterial ausgeschäumt werden. Dabei kann das hohle Außenteil zumindest teilweise aus Metall bestehen, das durch ein Innenhochdruckumformverfahren hergestellt und anschließend mit einem Schaummaterial gefüllt wird.

Es ist aber auch möglich, den Schaum getrennt in einer Form auszuschäumen und dann mittels eines Schrumpfverfahrens od.durch Einziehen des Außenformteils od. dgl. in das Auβenformteil einzubringen, wobei darauf zu achten ist, daß bei den zu erwartenden Betriebsbedingungen keine Auftrennung der Materialien erfolgen wird.

Die einfache Herstellung von Metallschäumen ist neuerdings möglich, wobei bspw. eine Treibmittel/Metallmischung in an sich bekannter Weise in der hohlen Außenform aufgeschäumt wird (s. Studiengesellschaft Stahlanwendung e.V. Forschung für die Praxis; P 286-Prospektive Marktstudie zur Anwendung von Stahlschäumen von Dipl.-Ing. Markus Weber, Verlag und Vertriebsgesellschaft mbH, Düsseldorf 1995.)

Der Metallschaum kann bspw. ein Stahl- oder Aluminiumschaum oder irgendein anderer Metall-Schaum sein, der aufgrund der Erfordernisse und des beabsichtigten Einsatzzweckes und seiner dementsprechenden Eigenschaften des Hohlteiles ausgewählt wird.

Es ist sinnvoll sein, daß die Schaumfüllung ein Metallschaum ist, falls sie bspw. hohen Temperaturen ausgesetzt werden soll oder das Außenformteil abstützen/stabilisieren soll. Das Ausschäumen des Außenformteils verbessert außerdem das elastische Verhalten der Außenwände sowie die thermische und akustische Isolation.

Der Schaum kann auch offenzellig derart sein, daß zB. ein Durchleiten von Fluiden zur Kühlung oder Erwärmung des Formteils ermöglicht.

Eine bevorzugte Ausführungsform des Herstellungsverfahrens für Bauteil weist folgende Schritte auf:
Vorlegen eines Hohlprofils, ggf. mit unterschiedlichen Durchmessern;
Einlegen eines Hohlprofilabschnitts in eine Form mit einer Erweiterung im Umformbereich;
Anlegen eines Innenhochdrucks an das Rohr, so daß die Rohrwand im Bereich der Formerweiterung erweitert wird; Herausnehmen des umgeformten Hohlteils mit Erweiterungen sowie ggf. Einbringen einer Schaumausgangsmischung aus Schaummaterial und Treibmittel in das Hohlteil und Aktivieren des Treibmittels, sodaß der Schaum das Hohlteil ausschäumt.

Es ist aber auch möglich, den Schaum getrennt vom Hohlteil in einer Aufschäumform herzustellen und dann das schwammartige Gebilde im hohlen Außenteil bspw. durch ein Schrumpfverfahren oder Einziehen des Außenteils zu befestigen oder nach thermischem Aufweiten des Hohlteils einzubringen, wobei die Befestigung dann bei der thermischen Schrumpfung des Außenteils erfolgt.

Unter dem erwähnten Innenhochdruckverfahren oder auch IHV-Verfahren wird hier das Verfahren verstanden, das beispielsweise im Industrieanzeiger Nr. 20 vom 9.3.1984 beschrieben worden ist oder auch in "Metallumformtechnik", Ausgabe 1D/91, Seite 15 ff: A. Ebbinghaus: Präzisionswerkstücke in Leichtbauweise, hergestellt durch Innenhochdruckumformen" oder auch Werkstoff und Betrieb 123 (1990), 3, Seite 241 bis 243: A. Ebbinghaus: "Wirtschaftliches Konstruieren mit innenhochdruckumgeformten Präzisionswerkstücken" oder auch "Werkstoff und Betrieb 122, (1991), 11, (1989), Seite 933 bis 938. Nachfolgend wird zur Vermeidung von Wiederholungen auf deren Offenbarung in vollem Umfang Bezug genommen wird, beschrieben ist. Dieses Verfahren wurde bisher für die Herstellung von verschiedenen geformten Hohlteilen, wie bzw. zur Herstellung von gebauten Nockenwellen zur Befestigung von Nocken an einem Rohr, zur Herstellung von hohlen Nockenwellen, aber auch zur Herstellung von Kraftfahrzeugrahmenteilen eingesetzt. Überraschenderweise lassen sich durch dieses Innenhochdruckverfahren völlig neuartige hohle Metall-Bauteile, bei denen der Faserverlauf im Bereich der Kreuzung sowie der Wände im wesentlichen parallel zur Außenkontur verläuft, ohne daß Ausknickungen oder andere Schwächungen vorliegen, bilden. Diese hohlen Formteile können demzufolge aufgrund der hohen Wandfestigkeit durch den günstigen Faserverlauf sowie die Vestärkung durch die Innenausschäumung in leichterer Form als bisher ausgebildet werden und ermöglicht dadurch eine erhebliche Gewichtsersparnis. Es ist auch möglich, für die Außenform laminierte Werkstoffe einzusetzen, sofern sich diese gemeinsam umformen lassen. Laminate können durch geeignete Materialauswahl leichter sein als Vollmaterialien und haben noch dazu den Vorteil, vibrationsdämpfend zu wirken oder auch an den Oberflächen entsprechend den Umgebungsbelastungen (Korrosion durch Säuren etc.) oder aus ästhetischen Gründen (Farbe) andere Schichten aufzuweisen, sodaß ein derartiges Teil noch dazu günstige Schwingungsdämpfungseigenschaften besitzt, da die Ausschäumung je nach Material elastisch an den Außenwänden anliegt - also die Materialien weniger durch Schwingungen belastet werden.

Es kann auch ein mehrschichtiges Metallrohr als Ausgangsteil, je nach den Anforderungen an das Material, gewählt werden.

Dabei haben mehrschichtige Ausgestaltungen den Vorteil unterschiedlicher Beanspruchbarkeit der Oberflächen des Hohlteils und auch den Vorteil, Schwingungen aller Art schlechter zu leiten, was das Vibrationsverhalten des Hohlteils im Einsatz entscheidend verbessert. Die Innenschicht kann dabei so ausgewählt sein, daß sie unter vorbestimmten Bedingungen, bspw. erhöhte Temperatur, eine Verbindung mit dem Schaummaterial ähnlich einem Lötverfahren oder durch gegenseitige Diffusion eingeht und so die Befestigung des Schaums im hohlen Außenteil bewirkt. Es ist aber auch möglich, einen Metallschaum in einem Kunststoffaußenhohlteil oder in einem mit Kunststoff als Außenschicht aufweisenden Mehrschichtaußenhohlteil vorzuehen, insbesondere dann, wenn die Kunststoffaußenschicht aus Korrosionsgründen oder anderen Gründen, bspw. wegen den Schmiereigenschaften des Kunststoffes od. dgl., erwünscht ist.

Es ist auch möglich, das gesamte Formteil nach Einbringen des Schaums mit einem Umformverfahren umzuformen und so weitere Formen zu erhalten, wobei es bei Einsatz eines IHV-Verfahrens notwendig ist, offenzellige Schäume zu verwenden.

Vorteilhafte Verwendungen des erfindungsgemäßen Teils sind Land- Luft- und Wasserfahrzeuge, Fahrrad-, Motorrad- sowie Autorahmen, Hoch- und Tiefbau, Gerüste, Regalsysteme, Möbel, insbesondere auch als kühlbare Teile, durch deren offenzellige Schäume Kühlfluide geführt werden können.

Insbesondere in allen Anwendungsgebieten des Leichtbaus bietet sich seine Verwendung an.

Dadurch, daß erfindungsgemäß weitestgehend abgeschlossene ausgeschäumte Hohlteile als Bauteile eingesetzt werden, ist es möglich, extrem leichte, aber feste und vibrationsgedämpfte Bauteile oder auch Bauteile kleinerer Abmessungen zu ermöglichen.

Dadurch, daß ein Innenhochdruckumformverfahren eingesetzt wird, ist es möglich, bereits in einem Formvorgang Erhebungen und Vertiefungen u. dgl. am Außenhohlteil herzustellen. Dadurch ist es möglich, Nachbehandlungsschritte zu reduzieren.

Als Hohlteile können dabei unterschiedlichste Hohlprofile nämlich Reckteckprofile, Winkelprofile, Rohre, gewellte Rohre etc. eingesetzt werden.

Es wird somit ein Teil mit einem gegenüber bisherigen Teilen geringerem Gewicht bei gleicher Belastbarkeit oder auch höherer Belastbarkeit bei geringem Gewicht geschaffen, das noch dazu mit hoher Produktionsgenauigkeit bei verminderter Ausschußquote hergestellt werden kann.

Nachfolgend soll die Erfindung näher anhand der beigefügten Zeichnung erläutert werden, in der bevorzugte Ausführungsformen der Erfindung, auf die diese aber keineswegs beschränkt ist, dargestellt sind. Dabei zeigt:
- Fig. 1:: einen Ausschnitt eines erfindungsgemäßen Bauteils schematisch in perspektivischer Darstellung mit einem geschlossenzelligen Schaum;
- Fig. 2:: das Bauteil nach Fig. 1 im Längsschnitt;
- Fig. 3.: das Bauteil nach Fig. 1 im Querschnitt entlang der Linie A-A der Fig. 1;
- Figur 4.: ein erfindungsgemäßes Bauteil mit offenzelligem Schaum im Querschnitt,
- Fig. 5.: einen Querschnitt durch ein erfindungsgemäßes Bau teil mit mehrschichtigen Außenwänden; und
- Fig. 6: einen Längsschnitt durch einen Abschnitt eines mit verschiedenen Querschnitten ausgebildeten Mehrschicht-Hohlteils mit Schaumfüllung.

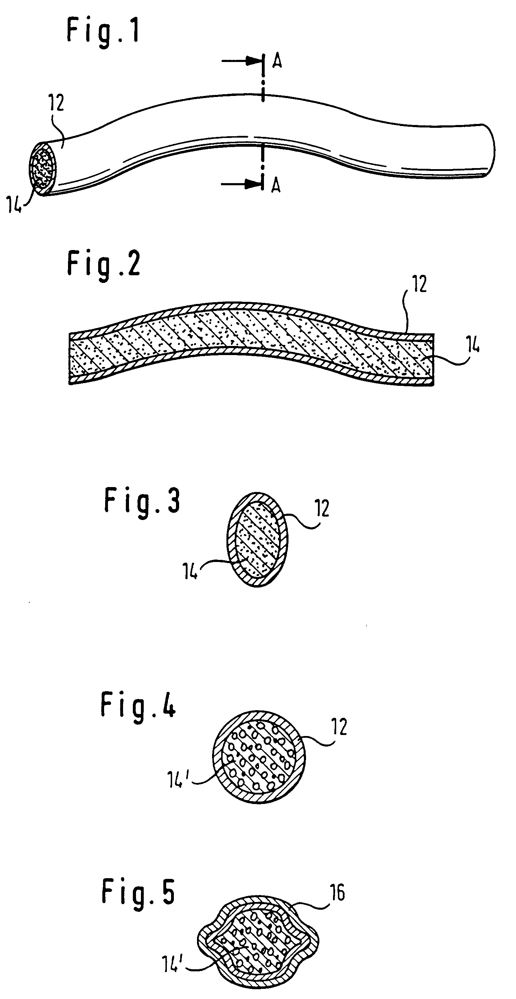

Wie aus Fig. 1, 2 und 3, die jeweils das gleiche Bauteil (Automobilachsträger aus Aluminiumlegierung) zeigen, ersichtlich, besteht das dort dargestellte Bauteil aus einer Außenwand 12 und der Ausschäumung 14 (beides hier aus Aluminiumlegierung). Das Außenformteil wurde mittels des IHV-Verfahrens dreidimensional geformt, um bspw. als Teil einer Raumlenkerachse eingesetzt zu werden.

Es ist zu beachten, daß in die durch das Umformverfahren hergestellten Teile - die Außenwand - Soll-Stauchstellen durch gezielt eingeformte Rillen ausgebildet werden können - bspw. um bei Fahrzeugen im Falle eines Unfalls durch gezielte Verformung Energie aufzunehmen - oder auch Verstärkungsprofile eingearbeitet werden können - bspw. durch das Ausformen von Längsrippen (Fahrgastzelle).

Dabei können die Hohlprofile des Fachwerkes unterschiedliche Durchmesser über ihre Längserstreckung besitzen, sowie unterschiedliche Querschnitte.

In Fig. 4 ist detailliert eine andere Anwendungsform eines erfindungsgemäßen Teils dargestellt. Es handelt sich hierbei um einen Trägerkörper für Kraftfahrzeugkatalysatoren, der einen offenzelligen Stahlschaum in einem Stahlaußengehäuse aufweist. Bei dieser Ausführungsform entfällt die bei diesen Trägerkörpern allgemein bekannte Problematik der Verbindung zwischen Gehäuse und Trägerkörper sowie das Problem der Herstellung von Gaskanälen, die dann mit dem Katalysator beschichtet werden, völlig, da aufgrund der Tatsache, daß nun erstmals das gleiche Material für Gehäuse und Gasdurchlaßkörper (auch häufig als Wabenkörper bezeichnet) verwendet werden kann, Spannungen im Katalysatorträgerkörper, aufgrund der unterschiedlichen Ausdehnungskoeffizienten der für den Trägerkörper verwendeten Materialien, die dessen Lebensdauer bisher einschränkten, vermieden werden können.

In Fig. 5 ist eine weitere Ausführungsform eines erfindungsgemäßen Bauteils mit einem gerippten Rohr dargestellt, wobei die mehrwandige Außenform eine Ausschäumung aufweist.

Dabei können die Hohlprofile sowohl aus einem einzigen Material, bspw. Stahl oder eine Leichtmetallegierung, bestehen, es ist aber je nach Einsatzverfahren auch möglich, Laminatmaterial, auch kunststoffbeschichtete oder überzogene Rohre umzuformen, je nach Anwendungszweck.

Durch das Vorsehen entsprechender Schichten ist es möglich, korrosionsbeständigkeit oder auch Farbgebung zu erreichen, ohne daß weitere Arbeitsschritte notwendig sind.

Insbesondere kann durch das Ausschäumen mit geschlossenzelligen Schäumen eine hohe Korrosionsfestigkeit erzielt werden, da durch den geschlossenzelligen Schaum kein korrodierendes Material Zutritt erhält.

Wie bekannt, kann Nachführen von Material entlang der Rohrlängsachsen während des Umformens, bspw. durch bewegliche Formelemente, eine im wesentlichen gleichbleibende Wandstärke in der Außenform erzielt werden, so daß Schwächungen der Wandstärke der Außenform durch die Anformung von Erhebungen zumindest teilweise ausgeglichen werden können, so daß eine Anformung von Erhebungen ohne Schwächung erfolgt.

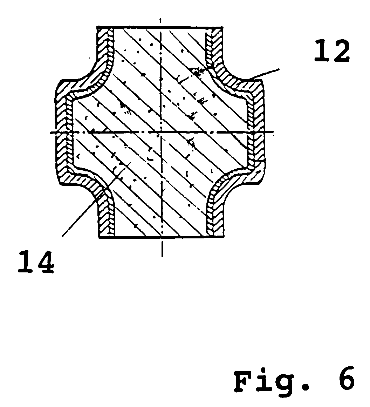

Eine derartige Ausführungsform ist in Fig. 6 dargestellt, wobei ein mehrschichtiges Außenformteil 12, dessen Außenschicht aus Stahl und dessen Innenschicht aus einer Aluminium-Legierung besteht, eine flanschartige Erhebung aufweist, mit einem Aluminiumschaum 14 gefüllt ist. Selbstverständlich kann dieses Formteil der Fig. 6 auch andere Materialkombinationen aufweisen.

Somit wird durch die erfindungsgemäße Ausbildung ein widerstandsfähigeres, leichteres Trägermaterial als bisher möglich, geschaffen.

Weitere Ausgestaltungen und Fortentwicklungen sind im Rahmen des Schutzumfangs der Ansprüche dem Fachmann offensichtlich und der Schutzumfang ist keineswegs auf die hier beispielhaft aufgeführten Ausführungsformen begrenzt, die lediglich zur Erläuterung dienen sollen.

## Patentansprüche

1. Verfahren zur Herstellung eines verstärkten Formteils mit ggf. in Form und/oder Größe unterschiedlichen Längs- und/oder Querschnitten, wobei
ein mindestens teilweise hohles Außenformteil vorgelegt wird,
Schaummaterial und Treibmittel in das hohle Außenformteil eingebracht werden, und
das Treibmittel aktiviert wird, sodaß sich ein offen- oder geschlossenzelliger Metall-Schaumstoff mit hohem Widerstand gegen Verformung, der am Außenformteil zumindest teilweise anliegt, den Innenhohlraum des hohlen Außenformteils mindestens teilweise ausfüllt und dessen Belastungseigenschaften und die Widerstandsfähigkeit gegen Verformung verbessert, im Außenformteil bildet.

2. Verfahren nach Anspruch 1, **dadurch gekennzeichnet, daß** der Faserverlauf des Materials des Außenformteils im wesentlichen parallel zu seinen Außenkonturen verläuft.

3. Verfahren nach Anspruch 1 oder 2, **dadurch gekennzeichnet, daß** das Außenformteil mehrere parallel zueinander verlaufende, aufeinanderliegende Schichten gleicher oder unterschiedlicher Materialien aufweist, deren Faserverlauf vollständig oder teilweise parallel zueinander ist.

4. Verfahren nach einem der vorangehenden Ansprüche, **dadurch gekennzeichnet, daß** die Materialien des Außenformteils eine oder mehrere - ggf. gemeinsam umgeformte - Schichten aus kalt- oder warmverformbarem Material aufweisen.

5. Verfahren nach Anspruch 4, **dadurch gekennzeichnet, daß** mindestens ein kaltverformbares Material ausgewählt ist aus der Gruppe bestehend aus Metall und Leichtmetall.

6. Verfahren nach Anspruch 5, **dadurch gekennzeichnet, daß** das kaltverformbare Material ausgewählt ist aus der Gruppe bestehend aus Stahl, Aluminium, Magnesium, Titan und Legierungen derselben.

7. Verfahren nach einem der vorangehenden Ansprüche, **dadurch gekennzeichnet, daß** es faserverstärkte Werkstoffe im Außenformteil aufweist.

8. Verfahren nach Anspruch 7, **dadurch gekennzeichnet, daß** das hohle Außenformteil zumindest teilweise aus Metall besteht und durch ein Innenhochdruckumformverfahren hergestellt wird.

9. Verfahren nach Anspruch 8, **dadurch gekennzeichnet, daß** das hohle Außenformteil zumindest teilweise aus einem Polymeren besteht, wobei das Außenformteil durch Umformen seines mindestens einschichtigen Materials durch ein an sich bekanntes Umformverfahren, wie Gießen, thermisches Formen, Blasen oder auch Innenhochdruckumformen erzeugt und anschließend mit einem Metallschaummaterial gefüllt wird.

10. Verfahren nach einem der Ansprüche 8 - 9, **dadurch gekennzeichnet, daß** nach Aufschäumen des Metallschaums in das Außenformteil der im Außenformteil befindliche Metallschaum und das hohle Außenformteil gemeinsam umgeformt werden.

11. Formteil, hergestellt nach mindestens einem der Verfahren der Ansprüche 1 bis 10.

12. Verwendung des Formteils nach Anspruch 11 als tragendes Teil in Gerüsten, in Fachwerken, bspw. im Bau, im Fahrzeugbau für Luft, Land- und Wasserfahrzeuge und in Möbel.

## Claims

1. Process for producing a reinforced formed part with, if appropriate, longitudinal and/or cross sections differing in form and/or size, in which process
an at least partially hollow outer formed part is presented,
foam material and blowing agent are introduced into the hollow outer formed part, and
the blowing agent is activated, so that there is formed in the outer formed part an open-cell or closed-cell metal foam with high resistance to deformation, which at least partially bears against the outer formed part, at least partially fills the inner cavity of the hollow outer formed part and the loading properties and resistance to deformation of which are improved.

2. Process according to Claim 1, **characterized in that** the fibre orientation of the material of the outer formed part runs essentially parallel to its outer contours.

3. Process according to Claim 1 or 2, **characterized in that** the outer formed part has a plurality of layers of the same or different materials running parallel to one another and lying one on top of the other, the fibre orientation of which is completely or partially parallel to one another.

4. Process according to one of the preceding claims, **characterized in that** the materials of the outer formed part have one or more - if appropriate jointly formed - layers of cold- or hot-workable material.

5. Process according to Claim 4, **characterized in that** at least one cold-workable material is selected from the group comprising metal and lightweight metal.

6. Process according to Claim 5, **characterized in that** the cold-workable material is selected from the group comprising steel, aluminium, magnesium, titanium and alloys of the same.

7. Process according to one of the preceding claims, **characterized in that** it has fibre-reinforced materials in the outer formed part.

8. Process according to Claim 7, **characterized in that** the hollow outer formed part at least partially consists of metal and is produced by an internal high-pressure forming process.

9. Process according to Claim 8, **characterized in that** the hollow outer formed part at least partially consists of a polymer, the outer formed part being created by forming of its at least one-layered material by a forming process known per se, such as casting, thermoforming, blow moulding or else internal high-pressure forming, and is subsequently filled with a metal-foam material.

10. Process according to one of Claims 8 - 9, **characterized in that**, after expanding the metal foam into the outer formed part, the metal foam located in the outer formed part and the hollow outer formed part are jointly formed.

11. Formed part, produced according to at least one of the processes of Claims 1 to 10.

12. Use of the formed part according to Claim 11 as a load-bearing part in scaffolds, in truss or lattice frameworks, for example in construction, in vehicle construction for air, land and water craft and in furniture.

## Revendications

1. Procédé pour la fabrication d'une pièce préformée renforcée avec le cas échéant des sections longitudinales et/ou transversales différentes en forme et en taille, dans lequel on présente une pièce préformée extérieure au moins en partie creuse, on introduit dans la pièce préformée extérieure creuse un matériau cellulaire et un agent moussant, et on active l'agent moussant, de manière telle qu'il se forme dans la pièce préformée extérieure, un produit alvéolaire métallique à cellules ouvertes ou fermées avec une haute résistance à la déformation, qui s'applique au moins partiellement à la pièce préformée extérieure, qui remplit au moins partiellement l'espace intérieur creux de la pièce préformée extérieure creuse et qui améliore les propriétés de mise en charge et la capacité de résistance à la déformation de celle-ci.

2. Procédé suivant la revendication 1, **caractérisé en ce que** l'orientation des fibres de la matière de la pièce préformée extérieure est essentiellement parallèle à ses contours extérieurs.

3. Procédé suivant la revendication 1 ou 2, **caractérisé en ce que** la pièce préformée extérieure présente plusieurs couches superposées, orientées parallèlement les unes aux autres, en matériaux identiques ou différents, dont l'orientation des fibres est totalement ou partiellement parallèle l'une à l'autre.

4. Procédé suivant l'une quelconque des revendications précédentes, **caractérisé en ce que** les matériaux de la pièce préformée extérieure présentent une ou plusieurs couches - le cas échéant déformées ensemble - en matériau déformable à froid ou à chaud.

5. Procédé suivant la revendication 4, **caractérisé en ce que** l'on choisit au moins un matériau déformable à froid dans le groupe composé de métal et de métal léger.

6. Procédé suivant la revendication 5, **caractérisé en ce que** l'on choisit le matériau déformable à froid dans le groupe composé de l'acier, l'aluminium, le magnésium, le titane et les alliages de ceux-ci.

7. Procédé suivant l'une quelconque des revendications précédentes, **caractérisé en ce qu'**il présente des matériaux renforcés par des fibres dans la pièce préformée extérieure.

8. Procédé suivant la revendication 7, **caractérisé en ce que** la pièce préformée extérieure creuse se compose au moins partiellement de métal et est fabriquée par un procédé de déformation sous haute pression interne.

9. Procédé suivant la revendication 8, **caractérisé en ce que** la pièce préformée extérieure creuse se compose au moins partiellement d'un polymère, dans lequel la pièce préformée extérieure est produite par déformation de son matériau en au moins une couche par un procédé de déformation connu en soi, comme le moulage, le formage thermique, le soufflage ou aussi la déformation sous haute pression interne, et est ensuite remplie avec un matériau cellulaire métallique.

10. Procédé suivant l'une quelconque des revendications 8 - 9, **caractérisé en ce que** la mousse métallique se trouvant dans la pièce préformée extérieure et la pièce préformée extérieure creuse sont déformées ensemble après le moussage de la mousse métallique dans la pièce préformée extérieure.

11. Pièce préformée, fabriquée suivant au moins un des procédés des revendications 1 à 10.

12. Utilisation de la pièce préformée suivant la revendication 11 comme pièce portante dans des charpentes, dans des treillis, par exemple dans la construction, dans la construction de véhicules pour des véhicules aériens, terrestres et aquatiques, et pour des meubles.
